# EUROPÄISCHE PATENTSCHRIFT

(11) **EP 3 316 181 B1**
(45) Veröffentlichungstag und Bekanntmachung des Hinweises auf die Patenterteilung: **28.07.2021**
(21) Anmeldenummer: 17197314.2
(22) Anmeldetag: 19.10.2017
(51) Int. Cl.: G06K 9/00, G06K 9/62, B25J 9/16, B66F 9/06

(54) **VERFAHREN ZUM ERKENNEN VON OBJEKTEN IN EINEM LAGER UND FLURFÖRDERZEUG MIT EINER EINRICHTUNG ZUM ERKENNEN VON OBJEKTEN IN EINEM LAGER**
METHOD FOR DETECTING OBJECTS IN A BEARING AND INDUSTRIAL TRUCK WITH A DEVICE FOR DETECTING OBJECTS IN A STORAGE LOCATION
PROCÉDÉ DE DÉTECTION D'OBJETS DANS UN ENTREPÔT ET CHARIOT ÉLÉVATEUR DOTÉ D'UN DISPOSITIF DE DÉTECTION D'OBJETS DANS UN ENTREPÔT

(30) Priorität: 26.10.2016 DE 102016120386
(43) Veröffentlichungstag der Anmeldung: 02.05.2018
(73) Patentinhaber: Jungheinrich Aktiengesellschaft, 22047 Hamburg (DE)
(72) Erfinder: Kopelke, Jan, 22337 Hamburg (DE); Schulz, Eckhard, 24558 Henstedt-Ulzburg (DE)
(74) Vertreter: Hauck Patentanwaltspartnerschaft mbB

(56) Entgegenhaltungen:
- US-A1- 2014 232 826
- US-A1- 2015 347 840
- BAGLIVO L ET AL: "Autonomous pallet localization and picking for industrial forklifts: a robust range and look method;Autonomous pallet localization and picking for industrial forklifts", MEASUREMENT SCIENCE AND TECHNOLOGY, IOP, BRISTOL, GB, Bd. 22, Nr. 8, 7. Juli 2011 (2011-07-07), Seite 85502, XP020208768, ISSN: 0957-0233, DOI: 10.1088/0957-0233/22/8/085502

## Beschreibung

Die Erfindung betrifft ein Verfahren zum Erkennen von Objekten in einem Lager, bei dem Bilddaten mit einer 3D-Kamera erfasst werden, die an einem Flurförderzeug befestigt ist. Die Bilddaten umfassen eine Vielzahl von Bildpunkten, denen jeweils eine Entfernungsinformation zugeordnet ist. Auf Grundlage der Bilddaten wird ein zweidimensionaler Datensatz erstellt, indem Bildpunkte auf eine Projektionsebene projiziert werden. Der zweidimensionale Datensatz wird mit einem ein Objekt repräsentierenden, vordefinierten Muster verglichen. Wird beim Vergleichen eine Übereinstimmung festgestellt, wird ein Objekt erkannt.

Ein solches Verfahren ist aus der Druckschrift EP 2 767 925 A2 bekannt geworden. Das bekannte Verfahren ist praktikabel und kann zur Vereinfachung eines voll- oder teilautomatischen Betriebs eines Flurförderzeugs, also bei fahrerlosen Flurförderzeugen oder als Fahrerassistenzsystem, eingesetzt werden. Die Genauigkeit und Zuverlässigkeit des Verfahrens ist jedoch verbesserungsfähig.

Davon ausgehend ist es die Aufgabe der Erfindung, ein Verfahren zum Erkennen von Objekten in einem Lager und ein hierfür eingerichtetes Flurförderzeug zur Verfügung zu stellen, mit dem eine genauere und/oder zuverlässigere Erkennung von Objekten möglich ist.

Aus dem Artikel "Autonomous pallet localization and picking for industrial forklifts: a robust range and look method; Autonomous pallet localization and picking for industrial forklifts", von BAGLIVO L ET AL, MEASUREMENT SCIENCE AND TECHNOLOGY, IOP, BRISTOL, GB, (20110707), vol. 22, no. 8, page 85502, ist ein Verfahren zum Erkennen von Paletten bekannt geworden, bei dem im ersten Schritt zweidimensionale, mit einem Laserscanner erfasste Daten ausgewertet werden. Anschließend werden weitere Bilddaten mit einer Kamera erfasst und in einem zweiten Schritt für eine Objekterkennung verwendet.

Diese Aufgabe wird gelöst durch das Verfahren mit den Merkmalen des Anspruchs 1 und durch das Flurförderzeug mit den Merkmalen des Anspruchs 9. Vorteilhafte Ausgestaltungen sind in den sich jeweils anschließenden Unteransprüchen angegeben.

Das Verfahren dient zum Erkennen von Objekten in einem Lager und weist die folgenden Schritte auf:
- Erfassen von Bilddaten mit einer 3D-Kamera, die an einem Flurförderzeug befestigt ist, wobei die Bilddaten eine Vielzahl von Bildpunkten umfassen und jedem Bildpunkt eine Entfernungsinformation zugeordnet ist,
- Erstellen eines zweidimensionalen Datensatzes durch Projizieren von Bildpunkten auf eine senkrecht zu einer Blickrichtung der 3D-Kamera angeordnete Projektionsebene, indem alle relevanten Bildpunkte ohne Berücksichtigung der Entfernungsinformation in einer Ebene dargestellt werden,
- Vergleichen des zweidimensionalen Datensatzes mit einem ein Objekt repräsentierenden, vordefinierten Muster und vorläufiges Erkennen eines Objekts an einer Position der Projektionsebene, wenn beim Vergleichen eine Übereinstimmung festgestellt wird,
- Erstellen eines weiteren Datensatzes, der ein Tiefenprofil entlang einer Linie in der Projektionsebene an der Position, an der das Objekt vorläufig erkannt wurde, umfasst, wobei das Tiefenprofil für jeden Punkt der Linie einen Abstand eines Bildpunkts der Bilddaten von der Projektionsebene angibt,
- Vergleichen des weiteren Datensatzes mit einem dem Objekt zugeordneten, vordefinierten Tiefenprofilmuster und endgültiges Erkennen des Objekts, wenn beim Vergleichen eine Übereinstimmung festgestellt wird,
- wobei für einen Objekttyp ein erstes vordefiniertes Muster vorhanden ist, das einer Ansicht des ganzen Objekts entspricht, und ein zweites vordefiniertes Muster, das einem charakteristischen Ausschnitt des Objekts entspricht,
- wobei der zweidimensionale Datensatz bei einem ersten Abstand zwischen 3D-Kamera und Projektionsebene mit dem ersten vordefinierten Muster und bei einem zweiten Abstand zwischen 3D-Kamera und Projektionsebene mit dem zweiten vordefinierten Muster verglichen wird.

Die 3D-Kamera kann insbesondere eine *Time-of-Flight-*Kamera sein. Sie kann zum Beispiel an einem Lasttragmittel oder Lastschlitten des Flurförderzeugs befestigt sein, insbesondere in oder an einer Gabelzinkenspitze. Die von der 3D-Kamera erfassten Bilddaten bilden die Grundlage für alle weiteren Schritte. Die Bilddaten können während der Ausführung des Verfahrens ein- oder mehrmals aktualisiert werden. Insbesondere können die Bilddaten fortlaufend erfasst werden.

Um ein Objekt vorläufig zu erkennen und dessen Position zu ermitteln, werden zunächst Bildpunkte auf eine Projektionsebene projiziert. Dabei können sämtliche, in den Bilddaten enthaltenen Bildpunkte projiziert werden oder auch nur ein Teil davon, insbesondere alle Bildpunkte, die in einer räumlichen Umgebung der Projektionsebene enthalten sind. Die Projektionsebene wird bei dem Verfahren bevorzugt so gewählt, dass sie einer vermuteten Anordnung der zu erkennenden Objekte entspricht. Insbesondere kann als Projektionsebene eine Hauptebene des Lagers bestimmt werden, beispielsweise mit Hilfe einer statistischen Auswertung der Bilddaten, wie in der eingangs genannten Druckschrift im Einzelnen erläutert. Bei der Erfindung wird die Projektionsebene senkrecht zu einer Blickrichtung der 3D-Kamera gewählt werden, beispielsweise wenn das Flurförderzeug frontal vor einem Regal steht. Die Projektion der Bilddaten auf die Projektionsebene besteht im Wesentlichen darin, dass alle relevanten Bildpunkte ohne weitere Berücksichtigung der Entfernungsinformation in einer Ebene dargestellt werden.

In einem ersten *Template-Matching*-Schritt wird der zweidimensionale Datensatz mit einem vordefinierten Muster (*Template*) verglichen. Hierzu kann eine Korrelation des vordefinierten Musters mit dem zweidimensionalen Datensatz berechnet werden, und zwar bei unterschiedlichen relativen Anordnungen. Wird dabei eine Übereinstimmung festgestellt, d.h. wird ein bestimmtes Maß an Übereinstimmung überschritten, wird an der betreffenden Position der Projektionsebene vorläufig ein dem vordefinierten Muster entsprechendes Objekt erkannt. Das für das Feststellen einer Übereinstimmung erforderliche Maß an Übereinstimmung ist so gewählt, dass es überschritten wird, wenn eine hinreichende Wahrscheinlichkeit dafür besteht, dass die erfassten Bilddaten an der betreffenden Stelle ein dem vordefinierten Muster entsprechendes Objekt zeigen.

Bei der Erfindung wird nach diesem vorläufigen Erkennen eines Objekts ein zweiter *Template-Matching*-Schritt ausgeführt. Hierzu wird ein weiterer Datensatz erstellt, der ein Tiefenprofil entlang einer Linie an der Position der Projektionsebene umfasst, an der das Objekt vorläufig erkannt wurde. Die Linie verläuft in der Projektionsebene. Der weitere Datensatz kann ein eindimensionaler Datensatz sein, der zu jedem Punkt der Linie eine Tiefeninformation enthält. Es kann jedoch auch ein umfassenderer Datensatz verwendet werden, der Tiefeninformationen an den Punkten mehrerer, beispielsweise benachbarter Linien enthält. Mit der Tiefeninformation ist insbesondere ein absoluter oder relativer Abstand eines Bildpunkts von der Linie bzw. von der Projektionsebene gemeint. Anschließend wird der weitere Datensatz mit einem vordefinierten Tiefenprofilmuster (mit anderen Worten: mit einem zweiten Template) verglichen. Erst wenn bei diesem Vergleichen ebenfalls eine Übereinstimmung festgestellt wird, d.h. ein bestimmtes Maß an Übereinstimmung überschritten wird, wird das Objekt endgültig erkannt. Das für das Feststellen einer Übereinstimmung erforderliche Maß an Übereinstimmung ist so gewählt, dass es überschritten wird, wenn eine hinreichende Wahrscheinlichkeit dafür besteht, dass das erfasste Tiefenprofil an der betreffenden Stelle von einem dem vordefinierten Tiefenprofilmuster entsprechenden Objekt herrührt. Die erkannte Position des Objekts kann der im ersten Vergleichsschritt festgestellten Position in der Projektionsebene entsprechen. Es kann jedoch auch eine endgültige Position des Objekts unter Berücksichtigung des zweiten Vergleichsschritts ermittelt werden, die sich insbesondere in der Tiefenposition von der im ersten Vergleichsschritt ermittelten, vorläufigen Position unterscheiden kann.

Der zweite Vergleichsschritt unter Verwendung eines Tiefenprofilmusters kann als "Tiefenvalidierung" bezeichnet werden. Die Zuverlässigkeit der Objekterkennung wird durch die Tiefenvalidierung wesentlich verbessert. Insbesondere wird vermieden, dass fälschlicherweise ein Objekt erkannt wird, wenn die Projektion der Bilddaten auf die Projektionsebene nur zufällig dem ersten vorgegebenen Muster entspricht, obwohl eine vollständige Analyse der kompletten Bilddaten zeigt, dass es sich nicht um das betreffende Objekt handeln kann.

Ein besonderer Vorteil des Verfahrens besteht darin, dass für die beiden Vergleichsschritte im Wesentlichen dieselben Algorithmen verwendet werden können. Der Rechenaufwand ist daher relativ gering und das Verfahren kann einfach umgesetzt werden.

In einer Ausgestaltung ist die Projektionsebene in einem gleichmäßigen Abstand von einer Regelfront angeordnet. Die Anordnung einer Regalfront kann auf Grundlage der von einer 3D-Kamera erfassten Bilddaten bestimmt werden, beispielsweise wie in der eingangs zitierten Druckschrift erläutert auf Grundlage einer statistischen Auswertung. Die Verwendung einer Regelfront als Projektionsebene ist in vielen Fällen besonders günstig, weil die zu erkennenden Objekte, beispielsweise Paletten oder sonstige Ladungsträger oder horizontale oder vertikale Träger des Regals in der Regel in oder nahe der Regalfront angeordnet sind.

In einer Ausgestaltung ist die Linie horizontal oder vertikal angeordnet. Grundsätzlich kann die Linie eine beliebige Orientierung innerhalb der Projektionsebene aufweisen. Eine horizontale oder vertikale Anordnung kann die Auswertung vereinfachen. Außerdem zeigen viele zu erkennende Objekte gerade in diesen Raumrichtungen ein besonders charakteristisches Tiefenprofil.

In einer Ausgestaltung sind einem Objekt mehrere Tiefenprofilmuster zugeordnet, die jeweils ein Tiefenprofil des Objekts bei einem vorgegebenen Blickwinkel auf das Objekt angeben, wobei das Vergleichen des weiteren Datensatzes mit demjenigen Tiefenprofilmuster ausgeführt wird, dessen Blickwinkel auf das Objekt einem Winkel einer Blickrichtung der 3D-Kamera beim Erfassen der Bilddaten auf die Projektionsebene entspricht. Da die Projektionsebene in der Regel auf Grundlage der von der 3D-Kamera erfassten Bilddaten berechnet wird, ist der Winkel zwischen der Blickrichtung der 3D-Kamera zur Projektionsebene bekannt. Er beeinflusst die von der 3D-Kamera erfassten Tiefeninformationen über die zu erkennenden Objekte. Es ist daher sinnvoll, beim zweiten *Template-Matching*-Schritt Tiefenprofilmuster zu verwenden, die einen möglichst ähnlichen, idealerweise den gleichen Blickwinkel auf das Objekt aufweisen.

Bei der Erfindung sind für einen Objekttyp ein erstes vordefiniertes Muster, das einer Ansicht des ganzen Objekts entspricht, und ein zweites vordefiniertes Muster, das einem charakteristischen Ausschnitt des Objekts entspricht, vorhanden. Eine solche Verwendung mehrerer vordefinierter Muster zu einem bestimmten Objekttyp kann insbesondere die Genauigkeit der Positionsermittlung beim ersten *Template-Matching*-Schritt verbessern oder überhaupt erst ermöglichen. Dies gilt insbesondere dann, wenn ein zu erkennendes Objekt in dem von der 3D-Kamera erfassten Bildbereich nur ausschnittsweise erkennbar ist, beispielsweise wenn sich eine zu erkennende Palette bereits nahe vor dem Lasttragmittel befindet.

Bei der Erfindung wird der zweidimensionale Datensatz bei einem ersten Abstand zwischen 3D-Kamera und Projektionsebene mit dem ersten vordefinierten Muster und bei einem zweiten Abstand zwischen 3D-Kamera und Projektionsebene mit dem zweiten vordefinierten Muster verglichen. Ein solches Umschalten des verwendeten vordefinierten Musters in Abhängigkeit vom Abstand kann zu einer besonders genauen Positionsbestimmung und zuverlässigen Objekterkennung führen, beispielsweise beim Heranfahren an ein mit einem Lasttragmittel aufzunehmendes Objekt nach dem Unterschreiten eines vorgegebenen Abstands.

In einer Ausgestaltung repräsentiert das erste vordefinierte Muster eine Palette und das zweite vordefinierte Muster eine Palettentasche. Als Palettentasche wird derjenige Bereich einer Palette bezeichnet, in den ein Lasttragmittel, insbesondere eine einzelne Gabelzinke, eingeführt wird. Bei der Verwendung einer Palettentasche als vordefiniertes Muster kann die für das Einführen des Lasttragmittels maßgebliche Position besonders genau ermittelt werden.

In einer Ausgestaltung repräsentiert das vordefinierte Muster einen horizontalen Träger und besteht aus einer horizontalen, rechteckigen Fläche und einem unterhalb davon angeordneten, rechteckigen Freiraum. Eine Höhe der horizontalen, rechteckigen Fläche kann insbesondere einer Höhe eines horizontalen Trägers entsprechen oder geringer als diese Höhe sein. Diese Wahl des vordefinierten Musters berücksichtigt, dass in typischen Lagern unterhalb eines horizontalen Trägers auch dann ein Freiraum verbleibt, wenn ein darunter befindlicher Lagerplatz besetzt ist, während unmittelbar oberhalb des horizontalen Trägers häufig eine Last angeordnet ist. Es ist daher für eine zuverlässige Erkennung eines horizontalen Trägers sinnvoll, den Freiraum unterhalb des horizontalen Trägers, nicht jedoch einen Bereich oberhalb des horizontalen Trägers, in das vordefinierte Muster einzubeziehen.

In einer Ausgestaltung weist der weitere Datensatz ein Tiefenprofil entlang einer vertikalen Linie auf, das mit einem Tiefenprofilmuster eines horizontalen Trägers verglichen wird. Das Tiefenprofil eines horizontalen Trägers entlang einer vertikalen Linie ist besonders charakteristisch und daher für die Erkennung ideal.

In einer Ausgestaltung wird vor der endgültigen Erkennung eines horizontalen Trägers ein Tiefenprofil entlang einer horizontalen Linie auf Sprünge untersucht. Ist das Tiefenprofil nicht frei von Sprüngen, handelt es sich in der Regel nicht um einen horizontalen Träger. Durch den zusätzlichen Prüfungsschritt kann daher eine fehlerhafte Erkennung eines horizontalen Trägers vermieden werden.

Die oben angegebene Aufgabe wird ebenfalls gelöst durch das Flurförderzeug mit den Merkmalen des Anspruchs 9. Das Flurförderzeug weist eine Einrichtung zum Erkennen von Objekten in einem Lager auf, wobei die Einrichtung eine 3D-Kamera und eine Auswerteeinrichtung aufweist und wobei die 3D-Kamera an dem Flurförderzeug befestigt und zur Erfassung von Bilddaten ausgerüstet ist und die Bilddaten eine Vielzahl von Bildpunkten umfassen, denen jeweils eine Entfernungsinformation zugeordnet ist. Die Auswerteeinrichtung ist zur Ausführung der folgenden Schritte eingerichtet:
- Erstellen eines zweidimensionalen Datensatzes durch Projizieren von Bildpunkten auf eine Projektionsebene,
- Vergleichen des zweidimensionalen Datensatzes mit einem ein Objekt repräsentierenden, vordefinierten Muster und vorläufiges Erkennen eines Objekts an einer Position der Projektionsebene, wenn beim Vergleichen eine Übereinstimmung festgestellt wird,
- Erstellen eines weiteren Datensatzes, der ein Tiefenprofil entlang einer Linie an der Position der Projektionsebene umfasst,
- Vergleichen des weiteren Datensatzes mit einem dem Objekt zugeordneten, vordefinierten Tiefenprofilmuster und endgültiges Erkennen des Objekts, wenn beim Vergleichen eine Übereinstimmung festgestellt wird.

In einer Ausgestaltung ist die Auswerteeinrichtung gemäß einem der Ansprüche 2 bis 7 ausgestaltet, d.h. sie ist dazu eingerichtet, die in dem betreffenden Anspruch angegebenen, zusätzlichen Schritte auszuführen bzw. einen der vorgenannten Schritte so auszuführen, wie in dem betreffenden Anspruch angegeben. Zu den Merkmalen und Vorteilen des Flurförderzeugs wird auf die vorstehenden Erläuterungen des Verfahrens verwiesen, die entsprechend gelten.

Nachfolgend wird die Erfindung anhand von in Figuren dargestellten Ausführungsbeispielen näher erläutert. Es zeigen:
- Fig. 1: ein erfindungsgemäßes Flurförderzeug in einer schematischen Darstellung von oben und von der Seite,
- Fig. 2: schematische Darstellungen zu einzelnen Verfahrensschritten beim Erkennen einer Palette,
- Fig. 3: schematische Darstellungen zu einzelnen Verfahrensschritten beim Erkennen einer Palettentasche,
- Fig. 4: schematische Darstellungen zu einzelnen Verfahrensschritten beim Erkennen eines horizontalen Trägers.

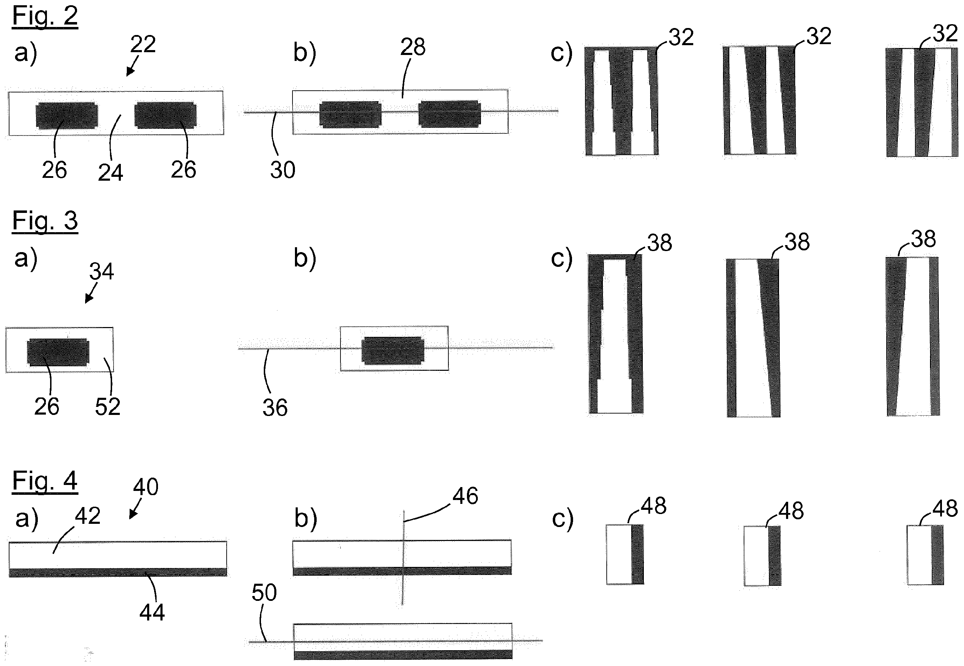

Die Teile a) der Figuren 2 bis 4 zeigen jeweils ein vordefiniertes Muster, die Teile b) der Figuren 2 bis 4 veranschaulichen jeweils die Bildung eines Tiefenprofils und die Teile c) der Figuren 2 bis 4 zeigen jeweils drei unterschiedlichen Blickwinkeln zugeordnete Tiefenprofilmuster.

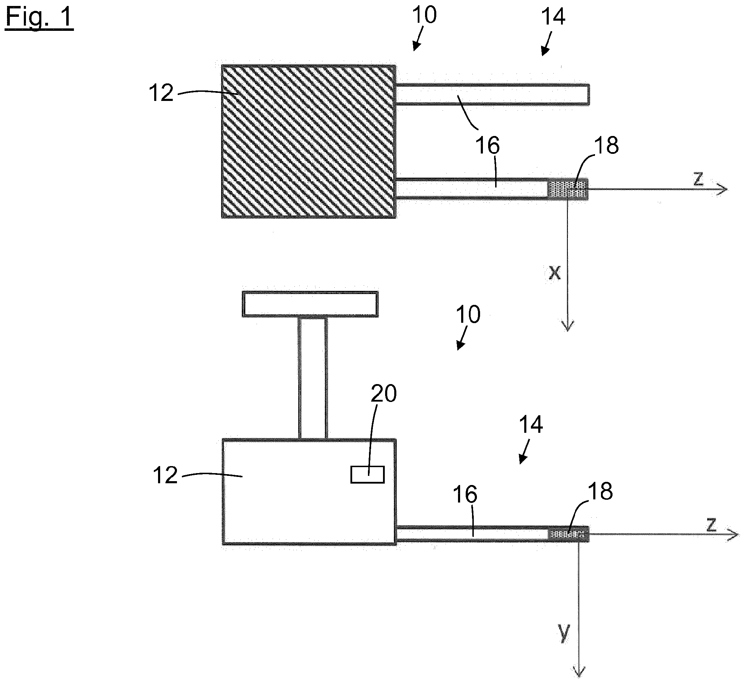

Figur 1 zeigt ein erfindungsgemäßes Flurförderzeug 10, im oberen Teil der Fig. 1 in einer Ansicht von oben, im unteren Teil der Fig. 1 in einer Ansicht von der Seite. Das Flurförderzeug 10 hat ein Antriebsteil 12 und ein Lastteil 14. Das Lastteil 14 weist zwei Gabelzinken 16 eines nicht näher dargestellten Lasttragmittels auf. In der Spitze einer der Gabelzinken 16 ist eine schematisch angedeutete 3D-Kamera 18 angeordnet.

Die 3D-Kamera 18 erfasst Bilddaten über einen Bereich vor der Gabelzinke 16. Die Blickrichtung der 3D-Kamera 18 verläuft in der Figur 1 in der z-Richtung des eingezeichneten Koordinatensystems, also entlang einer Hauptfahrtrichtung des Flurförderzeugs 10. Die x-Achse des Koordinatensystems, auf das die von der 3D-Kamera 18 erfassten Bilddaten bezogen sind, verläuft von der Spitze der Gabelzinke 16 aus in horizontaler Richtung nach rechts, die y-Achse von der Spitze der Gabelzinken 16 aus in vertikaler Richtung nach unten.

Im Antriebsteil 12 des Flurförderzeugs 10 ist eine Auswerteeinrichtung 20 angeordnet, die nur im unteren Teil der Figur angedeutet ist.

Figur 2 veranschaulicht im Teil a) ein vordefiniertes Muster 22, das eine Palette repräsentiert. Das vordefinierte Muster 22 weist eine hell dargestellte Fläche 24 auf, die einer Stirnseite der Palette entspricht, und zwei innerhalb der Fläche 24 symmetrisch angeordnete, dunkler dargestellte rechteckige Flächen 26, die den beiden Taschen der Palette entsprechen.

Bei dem erfindungsgemäßen Verfahren wird das vordefinierte Muster 22 mit einem zweidimensionalen Datensatz verglichen, der auf Grundlage der von der 3D-Kamera 18 erfassten Bilddaten durch Projektion von Bildpunkten auf eine Projektionsebene erstellt wurde.

Teil b) der Figur zeigt einen Ausschnitt 28 aus dem zweidimensionalen Datensatz, für den eine Übereinstimmung mit dem vordefinierten Muster 22 festgestellt wurde. Man erkennt in den projizierten Bilddaten die charakteristischen Merkmale einer Palette, wie zu dem zugehörigen vordefinierten Muster 22 erläutert, wieder.

Im nächsten Schritt des Verfahrens wird ein Tiefenprofil erstellt, und zwar entlang einer horizontalen Linie 30, die in Fig. 2 b) eingezeichnet ist. Das Tiefenprofil enthält für jeden Punkt der Linie 30 eine Tiefeninformation, die von der 3D-Kamera 18 beim Erfassen der Bilddaten, die auch dem zweidimensionalen Datensatz zugrunde gelegen haben, erfasst wurde.

Das auf diese Weise ermittelte Tiefenprofil wird in einem weiteren Verfahrens schritt mit einem der Palette zugeordneten, vordefinierten Tiefenprofilmuster 32 verglichen. Hierzu zeigt Fig. 2 c) drei nebeneinander dargestellte, vordefinierte Tiefenprofilmuster 32, die jeweils einer geringfügig abweichenden Blickrichtung auf das Objekt, eine Palette, entsprechen. Ganz links ist ein zu einer Palette gehörendes Tiefenprofilmuster 32 gezeigt, das sich bei Blickrichtung exakt von vorn auf die Stirnseite der Palette ergibt. Im mittleren Teil der Figur 2 c) ist ein weiteres Tiefenprofilmuster 32 einer Palette gezeigt, das bei leicht entgegen dem Uhrzeigersinn gedrehter Blickrichtung auf die Palette wahrgenommen wird, ganz rechts ein drittes Tiefenprofilmuster 32 der Palette bei leicht im Uhrzeigersinn gedrehter Blickrichtung.

Zum Vergleichen des weiteren Datensatzes bzw. des darin enthaltenen Tiefenprofils mit einem Tiefenprofilmuster 32 wird dasjenige Tiefenprofilmuster 32 herangezogen, dessen Blickrichtung der Blickrichtung der 3D-Kamera 18 auf die Projektionsebene entspricht. Wurden die Bilddaten also mit leicht schräg auf die Stirnseite einer Palette gerichteter Blickrichtung erfasst, erfolgt bei der Tiefenvalidierung der Vergleich mit einem Tiefenprofilmuster 32, das einem Blick auf eine ideale Palette aus derselben Blickrichtung entspricht.

Figur 3 a) zeigt ein weiteres vordefiniertes Muster 34, das einen Ausschnitt einer Palette darstellt, in dem eine dunkel dargestellte, rechteckige Fläche 26 eine Palettentasche und ein hell dargestellter, die rechteckige Fläche 26 allseitig umgebender, rechteckförmiger Ring 52 einen Teil der Stirnseite einer Palette repräsentiert. Das vordefinierte Muster 34 wird bei dem erfindungsgemäßen Verfahren verwendet, wenn die erfassten Bilddaten insbesondere wegen eines geringen Abstands zu einer Palette nicht mehr die gesamte Palette zeigen, sondern nur noch einen Ausschnitt davon. Wurde in den Bilddaten eine Übereinstimmung mit dem vordefinierten Muster 34 festgestellt, wird im nächsten Schritt, dargestellt in Figur 3 b), entlang einer horizontalen Linie 36 ein Tiefenprofil erstellt und in einem weiteren Datensatz zugänglich gemacht.

Anschließend erfolgt ein Vergleich mit einem vordefinierten Tiefenprofilmuster 38 einer Palettentasche. Drei Beispiele aus unterschiedlichen Blickwinkeln sind in Fig. 3 c) dargestellt. Sie unterscheiden sich von den in Fig. 2 c) dargestellten Tiefenprofilmustern 32 der vollständigen Palette im Wesentlichen dadurch, dass sie lediglich eine Palettentasche und seitlich unmittelbar daran angrenzende Abschnitte einer Stirnseite der Palette umfassen.

Fig. 4 a) zeigt ein vordefiniertes Muster 40, das eine horizontalen Träger repräsentiert, beispielsweise einen horizontalen Träger eines Hochregals. Es besteht aus einer horizontalen, rechteckigen Fläche 42, die den Verlauf des horizontalen Trägers anzeigt, und eine in Fig. 4 a) unterhalb davon dargestellte, dunklere, ebenfalls rechteckige Fläche 44, die einen Freiraum unterhalb des horizontalen Trägers repräsentiert.

In Fig. 4 b) ist im oberen Teil dargestellt, wie bei vorläufiger Erkennung eines horizontalen Trägers mit Hilfe des vordefinierten Musters 40 in den auf eine Projektionsebene projizierten Daten ein Tiefenprofil erstellt wird, diesmal entlang einer vertikalen Linie 46.

Dieses Tiefenprofil bzw. ein dieses Tiefenprofil umfassender, weiterer Datensatz wird im nächsten Schritt mit einem in Fig. 4 c) dargestellten Tiefenprofilmuster 48 verglichen. Die drei Tiefenprofilmuster 48 in Fig. 4 c) unterscheiden sich wiederum in ihrem Blickwinkel, was wegen der einfacheren Struktur allerdings weniger augenfällig ist als in den Figuren 2 c) und 3 c).

Fig. 4 b) zeigt im unteren Teil, wie bei der Erkennung eines horizontalen Trägers in einem zusätzlichen Verfahrensschritt ein Tiefenprofil entlang einer horizontalen Linie 50 erstellt wird. Dieses wird nicht mit einem entsprechenden Tiefenprofilmuster verglichen, sondern lediglich auf Sprünge in der Tiefeninformation untersucht. Treten Sprünge auf, spricht dies dagegen, den entsprechenden Bildbereich als Träger zu identifizieren. Hat die Tiefeninformation entlang der Linie 50 einen kontinuierlichen Verlauf, deutet dies hingegen auf einen horizontalen Träger hin.

## Patentansprüche

1. Verfahren zum Erkennen von Objekten in einem Lager mit den folgenden Schritten:
• Erfassen von Bilddaten mit einer 3D-Kamera (18), die an einem Flurförderzeug (10) befestigt ist, wobei die Bilddaten eine Vielzahl von Bildpunkten umfassen und jedem Bildpunkt eine Entfernungsinformation zugeordnet ist,
• Erstellen eines zweidimensionalen Datensatzes durch Projizieren von Bildpunkten auf eine senkrecht zu einer Blickrichtung der 3D-Kamera angeordnete Projektionsebene, indem alle relevanten Bildpunkte ohne Berücksichtigung der Entfernungsinformation in einer Ebene dargestellt werden,
• Vergleichen des zweidimensionalen Datensatzes mit einem ein Objekt repräsentierenden, vordefinierten Muster (22, 34, 40) und vorläufiges Erkennen eines Objekts an einer Position der Projektionsebene, wenn beim Vergleichen eine Übereinstimmung festgestellt wird,
• Erstellen eines weiteren Datensatzes, der ein Tiefenprofil entlang einer Linie (30, 36, 46) in der Projektionsebene an der Position, an der das Objekt vorläufig erkannt wurde, umfasst, wobei das Tiefenprofil für jeden Punkt der Linie (30, 36, 46) einen Abstand eines Bildpunkts der Bilddaten von der Projektionsebene angibt,
• Vergleichen des weiteren Datensatzes mit einem dem Objekt zugeordneten, vordefinierten Tiefenprofilmuster (32, 38, 48) und endgültiges Erkennen des Objekts, wenn beim Vergleichen eine Übereinstimmung festgestellt wird,
• wobei für einen Objekttyp ein erstes vordefiniertes Muster (22) vorhanden ist, das einer Ansicht des ganzen Objekts entspricht, und ein zweites vordefiniertes Muster (34), das einem charakteristischen Ausschnitt des Objekts entspricht,
• wobei der zweidimensionale Datensatz bei einem ersten Abstand zwischen 3D-Kamera (18) und Projektionsebene mit dem ersten vordefinierten Muster (22) und bei einem zweiten Abstand zwischen 3D-Kamera (18) und Projektionsebene mit dem zweiten vordefinierten Muster (34) verglichen wird.

2. Verfahren nach Anspruch 1, **dadurch gekennzeichnet, dass** die Projektionsebene in einem gleichmäßigen Abstand von einer Regalfront angeordnet ist.

3. Verfahren nach Anspruch 1 oder 2, **dadurch gekennzeichnet, dass** die Linie (30, 36, 46) horizontal oder vertikal angeordnet ist.

4. Verfahren nach einem der Ansprüche 1 bis 3, **dadurch gekennzeichnet, dass** einem Objekt mehrere Tiefenprofilmuster (30, 36, 46) zugeordnet sind, die jeweils ein Tiefenprofil des Objekts bei einem vorgegebenen Blickwinkel auf das Objekt angeben, wobei das Vergleichen des weiteren Datensatzes mit demjenigen Tiefenprofilmuster (30, 36, 46) ausgeführt wird, dessen Blickwinkel auf das Objekt einem Winkel einer Blickrichtung der 3D-Kamera (18) beim Erfassen der Bilddaten auf die Projektionsebene entspricht.

5. Verfahren nach einem der Ansprüche 1 bis 4, **dadurch gekennzeichnet, dass** das erste vordefinierte Muster (22) eine Palette und das zweite vordefinierte Muster (34) eine Palettentasche repräsentiert.

6. Verfahren nach einem der Ansprüche 1 bis 4, **dadurch gekennzeichnet, dass** das vordefinierte Muster (40) einen horizontalen Träger eines Hochregals repräsentiert und aus einer horizontalen, rechteckigen Fläche (42) und einem unterhalb davon angeordneten, rechteckigen Freiraum (44) besteht.

7. Verfahren nach einem der Ansprüche 1 bis 6, **dadurch gekennzeichnet, dass** der weitere Datensatz ein Tiefenprofil entlang einer vertikalen Linie (46) aufweist, das mit einem Tiefenprofilmuster (48) eines horizontalen Trägers eines Hochregals verglichen wird.

8. Verfahren nach einem der Ansprüche 1 bis 7, **dadurch gekennzeichnet, dass** vor der endgültigen Erkennung eines horizontalen Trägers eines Hochregals ein Tiefenprofil entlang einer horizontalen Linie (50) auf Sprünge untersucht wird.

9. Flurförderzeug (10) mit einer Einrichtung zum Erkennen von Objekten in einem Lager, wobei die Einrichtung eine 3D-Kamera (18) und eine Auswerteeinrichtung (20) aufweist, wobei die 3D-Kamera (18) an dem Flurförderzeug (10) befestigt und zur Erfassung von Bilddaten ausgerüstet ist und die Bilddaten eine Vielzahl von Bildpunkten umfassen, denen jeweils eine Entfernungsinformation zugeordnet ist, und die Auswerteeinrichtung (20) zur Ausführung der folgenden Schritte eingerichtet ist:
• Erstellen eines zweidimensionalen Datensatzes durch Projizieren von Bildpunkten auf eine senkrecht zu einer Blickrichtung der 3D-Kamera angeordnete Projektionsebene, indem alle relevanten Bildpunkte ohne Berücksichtigung der Entfernungsinformation in einer Ebene dargestellt werden,
• Vergleichen des zweidimensionalen Datensatzes mit einem ein Objekt repräsentierenden, vordefinierten Muster (22, 34, 40) und vorläufiges Erkennen eines Objekts an einer Position der Projektionsebene, wenn beim Vergleichen eine Übereinstimmung festgestellt wird,
• Erstellen eines weiteren Datensatzes, der ein Tiefenprofil entlang einer Linie (30, 36, 46) in der Projektionsebene an der Position, an der das Objekt vorläufig erkannt wurde, umfasst, wobei das Tiefenprofil für jeden Punkt der Linie (30, 36, 46) einen Abstand eines der Bildpunkte von der Projektionsebene angibt,
• Vergleichen des weiteren Datensatzes mit einem dem Objekt zugeordneten, vordefinierten Tiefenprofilmuster (32, 38, 48) und endgültiges Erkennen des Objekts, wenn beim Vergleichen eine Übereinstimmung festgestellt wird,
• wobei für einen Objekttyp ein erstes vordefiniertes Muster (22) vorhanden ist, das einer Ansicht des ganzen Objekts entspricht, und ein zweites vordefiniertes Muster (34), das einem charakteristischen Ausschnitt des Objekts entspricht,
• wobei der zweidimensionale Datensatz bei einem ersten Abstand zwischen 3D-Kamera (18) und Projektionsebene mit dem ersten vordefinierten Muster (22) und bei einem zweiten Abstand zwischen 3D-Kamera (18) und Projektionsebene mit dem zweiten vordefinierten Muster (34) verglichen wird.

10. Flurförderzeug nach Anspruch 9, **dadurch gekennzeichnet, dass** die Auswerteeinrichtung (20) gemäß einem der Ansprüche 2 bis 7 ausgestaltet ist.

## Claims

1. A method for recognizing objects in a warehouse with the following steps:
• Detecting image data with a 3D camera (18) attached to an industrial truck (10), wherein the image data comprise a plurality of pixels, and distance information is assigned to each pixel,
• Creating a two-dimensional data set by projecting pixels on a projection plane arranged perpendicular to a viewing direction of the 3D camera in that all relevant pixels are shown in one plane without taking into account the distance information,
• Comparing the two-dimensional data set with a predefined pattern (22, 34, 40) representing an object, and provisionally recognizing an object at a position in the projection plane when a correspondence is found in the comparison,
• Creating another data set that comprises a depth profile along a line (30, 36, 46) in the projection plane at the position at which the object was provisionally recognized, wherein the depth profile indicates a distance of a pixel of the image data from the projection plane for each point of the line (30, 36, 46),
• Comparing the other data set with a predefined depth profile pattern (32, 38, 48) assigned to the object, and finalizing the recognizing of the object when a correspondence is found in the comparison,
• Wherein, for an object type, a first predefined pattern (22) is present that corresponds to a view of the entire object, and a second predefined pattern (34) that corresponds to a characteristic section of the object,
• Wherein the two-dimensional data set is compared with the first predefined pattern (22) at a first distance between the 3D camera (18) and the projection plane and with the second predefined pattern (34) at a second distance between the 3D camera (18) and the projection plane.

2. The method according to claim 1, **characterized in that** the projection plane is arranged at an unchanging distance from a rack front.

3. The method according to claim 1 or 2, **characterized in that** the line (30, 36, 46) is arranged horizontally or vertically.

4. The method according to one of claims 1 to 3, **characterized in that** a plurality of depth profile patterns (30, 36, 46) are assigned to an object that each indicate a depth profile of the object from a given perspective of the object, wherein the comparison of the additional data set is performed with the depth profile pattern (30, 36, 46) with a perspective of the object that corresponds to an angle of a viewing direction of the 3D camera (18) when detecting the image data on the projection plane.

5. The method according to one of claims 1 to 4, **characterized in that** the first predefined pattern (22) represents a pallet and the second predefined pattern (34) represents a pallet opening.

6. The method according to one of claims 1 to 4, **characterized in that** the predefined pattern (40) represents a horizontal support of a high rack and consists of a horizontal, rectangular area (42) and a rectangular space (44) arranged therebelow.

7. The method according to one of claims 1 to 6, **characterized in that** the additional data set has a depth profile along a vertical line (46) that is compared with a depth profile pattern (48) of a horizontal support.

8. The method according to one of claims 1 to 7, **characterized in that** a depth profile along a horizontal line (50) is investigated for jumps before the final recognition of a horizontal support of a high rack.

9. An industrial truck (10) with an apparatus for recognizing objects in a warehouse, wherein the apparatus has a 3D camera (18) and an evaluation apparatus (20), wherein the 3D camera (18) is attached to the industrial truck (10) and is equipped to detect image data, and the image data comprise a plurality of pixels that are each assigned distance information, and the evaluation apparatus (20) is configured to execute the following steps:
• Creating a two-dimensional data set by projecting pixels on a projection plane arranged perpendicular to a viewing direction of the 3D camera in that all relevant pixels are shown in one plane without taking into account the distance information,
• Comparing the two-dimensional data set with a predefined pattern (22, 34, 40) representing an object, and provisionally recognizing an object at a position in the projection plane when a correspondence is found in the comparison,
• Creating another data set that comprises a depth profile along a line (30, 36, 46) in the projection plane at the position at which the object was provisionally recognized, wherein the depth profile indicates a distance of one of the pixels from the projection plane for each point of the line (30, 36, 46),
• Comparing the other data set with a predefined depth profile pattern (32, 38, 48) assigned to the object, and finalizing the recognizing of the object when a correspondence is found in the comparison,
• Wherein, for an object type, a first predefined pattern (22) is present that corresponds to a view of the entire object, and a second predefined pattern (34) that corresponds to a characteristic section of the object,
• Wherein the two-dimensional data set is compared with the first predefined pattern (22) at a first distance between the 3D camera (18) and the projection plane and with the second predefined pattern (34) at a second distance between the 3D camera (18) and the projection plane.

10. The industrial truck according to claim 9, **characterized in that** the evaluation apparatus (20) is designed according to one of claims 2 to 7.

## Revendications

1. Procédé de détection d'objets dans un entrepôt, comprenant les étapes suivantes :
• collecte de données d'image avec une caméra 3D (18) fixée à un chariot élévateur (10), les données d'image comportant une pluralité de points d'image et une information d'éloignement étant attribuée à chaque point d'image,
• établissement d'un jeu de données bidimensionnel par projection de points d'image sur un plan de projection disposé perpendiculairement à une direction de prise de vue de la caméra 3D, en affichant tous les points d'image concernés dans un plan sans tenir compte de l'information d'éloignement,
• comparaison du jeu de données bidimensionnel avec un modèle prédéfini (22, 34, 40) représentant un objet et détection préalable d'un objet à une position du plan de projection, lorsque la comparaison permet de déterminer une concordance,
• établissement d'un autre jeu de données comportant un profil de profondeur le long d'une ligne (30, 36, 46) dans le plan de projection à la position à laquelle l'objet a été détecté préalablement, le profil de profondeur indiquant une distance entre un point d'image des données d'image et le plan de projection pour chaque point de la ligne (30, 36, 46),
• comparaison de l'autre jeu de données avec un modèle de profils de profondeur (32, 38, 48) prédéfini attribué à l'objet et détection définitive de l'objet, lorsque la comparaison permet de déterminer une concordance,
• dans lequel, pour un type d'objet, il existe un premier modèle prédéfini (22) correspondant à une vue d'ensemble de l'objet, ainsi qu'un deuxième modèle prédéfini (34) correspondant à une partie caractéristique de l'objet,
• dans lequel le jeu de données bidimensionnel est comparé avec le premier modèle prédéfini (22) à une première distance entre la caméra 3D (18) et le plan de projection et avec le deuxième modèle prédéfini (34) à une deuxième distance entre la caméra 3D (18) et le plan de projection.

2. Procédé selon la revendication 1, **caractérisé en ce que** le plan de projection est disposé à une distance régulière d'une partie avant d'étagère.

3. Procédé selon la revendication 1 ou 2, **caractérisé en ce que** la ligne (30, 36, 46) est disposée horizontalement ou verticalement.

4. Procédé selon l'une des revendications 1 à 3, **caractérisé en ce que** plusieurs modèles de profils de profondeur (30, 36, 46) sont attribués à un objet, lesquels indiquent respectivement un profil de profondeur de l'objet pour un angle de vue prédéfini sur l'objet, dans lequel la comparaison de l'autre jeu de données est effectuée avec le modèle de profils de profondeur (30, 36, 46) dont l'angle de vue sur l'objet correspond à un angle d'une direction de prise de vue de la caméra 3D (18) pendant la collecte des données d'image vers le plan de projection.

5. Procédé selon l'une des revendications 1 à 4, **caractérisé en ce que** le premier modèle prédéfini (22) représente une palette et le deuxième modèle prédéfini (34) représente un sac de palette.

6. Procédé selon l'une des revendications 1 à 4, **caractérisé en ce que** le modèle prédéfini (40) représente un support horizontal d'un rayonnage et est constitué d'une surface rectangulaire horizontale (42) et d'un espace libre rectangulaire (44) disposé en-dessous de celle-ci.

7. Procédé selon l'une des revendications 1 à 6, **caractérisé en ce que** l'autre jeu de données présente un profil de profondeur le long d'une ligne verticale (46), lequel est comparé avec un modèle de profil de profondeur (48) d'un support horizontal d'un rayonnage.

8. Procédé selon l'une des revendications 1 à 7, **caractérisé en ce qu'**un profil de profondeur le long d'une ligne horizontale (50) est examiné quant à la présence de sauts avant la détection définitive d'un support horizontal d'un rayonnage.

9. Chariot élévateur (10) comprenant un dispositif de détection d'objets dans un entrepôt, dans lequel le dispositif présente une caméra 3D (18) et un dispositif d'évaluation (20), dans lequel la caméra 3D (18) est fixée au chariot élévateur (10) et équipée pour la collecte de données d'image et les données d'image comportent une pluralité de points d'image, auxquels est respectivement attribuée une information d'éloignement, et le dispositif d'évaluation (20) est conçu pour la mise en œuvre des étapes suivantes :
• établissement d'un jeu de données bidimensionnel par projection de points d'image sur un plan de projection disposé perpendiculairement à une direction de prise de vue de la caméra 3D, en affichant tous les points d'image concernés dans un plan sans tenir compte de l'information d'éloignement,
• comparaison du jeu de données bidimensionnel avec un modèle prédéfini (22, 34, 40) représentant un objet et détection préalable d'un objet à une position du plan de projection, lorsque la comparaison permet de déterminer une concordance,
• établissement d'un autre jeu de données comportant un profil de profondeur le long d'une ligne (30, 36, 46) dans le plan de projection à la position à laquelle l'objet a été détecté préalablement, le profil de profondeur indiquant une distance entre un parmi les points d'image et le plan de projection pour chaque point de la ligne (30, 36, 46),
• comparaison de l'autre jeu de données avec un modèle de profils de profondeur (32, 38, 48) prédéfini attribué à l'objet et détection définitive de l'objet, lorsque la comparaison permet de déterminer une concordance,
• dans lequel, pour un type d'objet, il existe un premier modèle prédéfini (22) correspondant à une vue d'ensemble de l'objet, ainsi qu'un deuxième modèle prédéfini (34) correspondant à une partie caractéristique de l'objet,
• dans lequel le jeu de données bidimensionnel est comparé avec le premier modèle prédéfini (22) à une première distance entre la caméra 3D (18) et le plan de projection et avec le deuxième modèle prédéfini (34) à une deuxième distance entre la caméra 3D (18) et le plan de projection.

10. Chariot élévateur selon la revendication 9, **caractérisé en ce que** le dispositif d'évaluation (20) est conçu selon l'une des revendications 2 à 7.
